# NEW EUROPEAN PATENT SPECIFICATION

(11) **EP 0 530 868 B3**
(45) Date of publication of this specification: **29.07.2009**
(45) Mention of the grant of the patent: 21.02.1996
(21) Application number: 92202285.0
(22) Date of filing: 24.07.1992
(51) Int. Cl.: A22C 21/06

(54) **Method and apparatus for processing poultry**
Verfahren und Vorrichtung zum Bearbeiten von Geflügel
Procédé et appareil pour le traitement de volaille

(30) Priority: 03.09.1991 NL 9101484
(43) Date of publication of application: 10.03.1993
(73) Proprietor: MEIJN FOOD PROCESSING TECHNOLOGY B.V., 1511 AE Oostzaan (NL)
(72) Inventor: Meyn, Cornelis, NL-1511 AE Oostzaan (NL)
(74) Representative: Van Breda, Jacobus

(56) References cited:
- BE-A2- 813 138
- GB-A- 1 378 411
- US-A- 3 474 492
- US-A- 3 663 991
- US-A- 4 467 498
- US-A- 4 616 381
- US-A- 5 026 317

## Description

The invention relates to an apparatus for processing poultry, comprising a suspension conveyor for conveying the birds with their legs suspended therefrom, a processing station disposed along a portion of the suspension conveyor and having processing means for removing the entrails from the abdominal cavity as the birds are conveyed by the suspension conveyor, an inspection station permitting a visual inspection of the entrails and corresponding birds, and a further conveyor synchronously driven with the suspension conveyor and disposed substantially parallel to and at a predetermind distance from a portion of the suspension conveyor.

In a known apparatus of this kind (US-A-4 616 381) the further conveyor is disposed before the processing station and adapted for receiving the ova harvested manually. At the inspection station the entrails are obviously as usually still connected with the bird after being removed from the abdominal cavity of the poultry and suspended over the back of the poultry (US-A-3 663 991, col. 4 lines 7-12), so that a veterinary inspector may now inspect the entrails and decide whether or not the poultry is fit for consumption. The determination of irregularities in an entrails package leads to rejection of the respective bird and removing it from the suspension conveyor. A disadvantage of these known apparatus is that there is a risk that the entrails, especially excrements leaving the intestines, contaminate the outside of the respective bird, which is undesirable.

Other know apparatus for processing poultry (US-A-4 467 498, BE-A-813138, US-A-5 026 317) comprise processing means for entively loosening the entrails immediately after removing from the abdominal cavity of the birds. But this has to do nothing with the inspection of the birds and their entrails.

It is an object of the invention to provide an apparatus of the type referred to above in which this disadvantage of possible contamination is eleminated in a simple, but nevertheless effective way.

Thus the apparatus according to the invention is characterized in that the processing means is adapted for entirely loosening the entrails from the birds and the further conveyor is disposed after the processing station for receiving and conveying the seperated entrails along the inspection station at the same time as the corresponding bird carried by the suspension conveyor.

Because the entrails are entirely loosened from the poultry, there is now no connection whatsoever occurs anymore between the entrails and the poultry, such that the risk of contamination has entirely vanished. Resulting from the synchronous movement a veterinary inspector at the inspection station judging the quality of the entrails can determine unambiguously which bird belongs to which entrails.

Further, according to a handy embodiment of the apparatus according to the invention, it is preferred that the further conveyor comprises an endless conveyor, such as a chain conveyor, carrying a number of transportation means for receiving the respective entrails packages. Such an embodiment offers a constructively simple embodiment, however an extremely effective operation.

Finally an embodiment is mentioned in which the transportation means comprise gripping means movable between an opened and a closed position. In the opened position the gripping means can take over the entrails from the means which have removed the entrails from the abdominal cavity of the bird. Next, in the closed position the entrails are moved synchronously with the poultry.

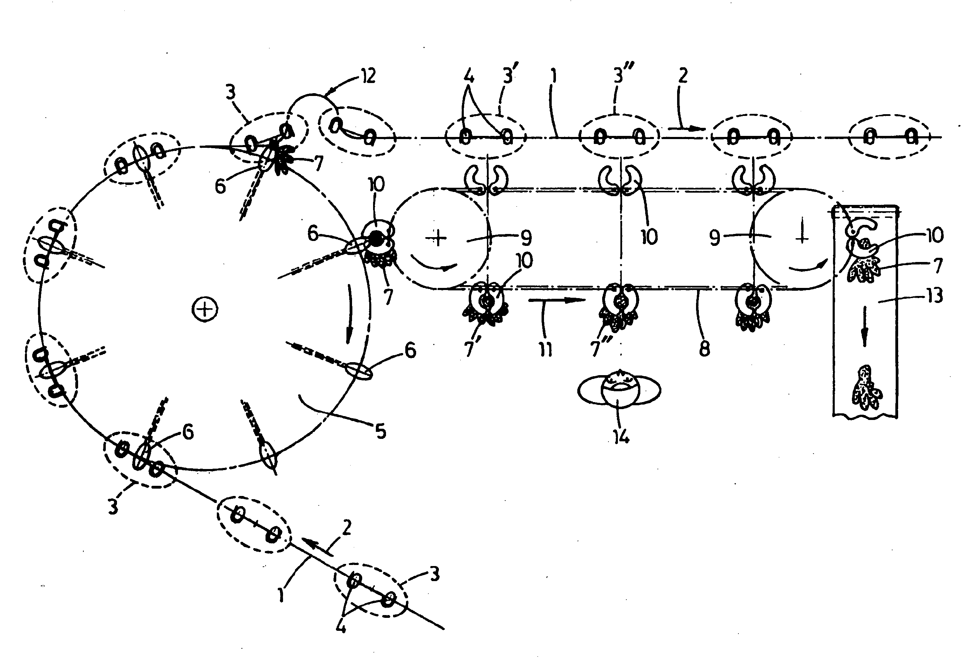

Hereinafter the invention will be elucidated further referring to the one and only figure, in which extremely schematically a top plan view of an embodiment of the apparatus according to the invention is represented.

In the figure a striped and dotted line represents a suspension conveyor 1 progressing in the direction of arrow 2. Birds 3 to be processed (schematically dotted) are, in a way known per se with their legs 4 suspended from the suspension conveyor 1. The suspension conveyor 1 passes a rotating processing apparatus 5 which carries regularly spaced about its circumference means 6 known per se too for removing the entrails 7 from the abdominal cavity of the bird. The operation of such a processing apparatus 5 comprising means 6 is known per se and does not need any further elucidation within the scope of the present invention. It is noted only that in the present embodiment the birds 3 are subjected to the required processing while passing the processing apparatus 5, wherein the entrails 7 are removed from the abdominal cavity and are entirely loosened from the birds.

As seen in the conveying direction of the suspension conveyor 1 behind the processing apparatus 5 and aside the suspension conveyor 1 still a further conveyor 8 is positioned for the entrails 7 removed from the birds 3. In the illustrated embodiment this conveyor 8 comprises an endless chain running around two reversal wheels 9. Of course other conveyors are conceivable too, such as belt conveyor or alike. The chain comprises a number of transportation means for receiving the respective entrails packages 7, in the illustrated embodiment shaped as gripping means 10.

The direction of progression of the chain conveyor 8 is indicated by arrow 11.

The entrails 7 removed from the birds 3 using the means 6 of the processing apparatus 5 are conveyed along by these means 6 until the gripping means 10 of the chain conveyor 8 take over the entrails 7 from the means 6. Next the entrails 7 are taken along by the chain conveyor 8. The transportation velocity of the chain conveyor 8 equals the transportation velocity of the suspension conveyor 1, such that the entrails 7 move along synchronously with the respective birds 3 at the part of the chain conveyor 8 distanced most from the birds 3. To take care that the entrails 7 are precisely synchronised with the respective bird 3 (such as entrails 7' and bird 3' or entrails 7" and bird 3") the suspension conveyor 1 runs through some curves 12 or alike.

The gripping means 10 are movable between an opened and a closed position. The motion from the opened towards the closed position occurs at the moment where the gripping means 10 and a processing means 6 of the processing apparatus 5 carrying an entrails package 7 are in proximity and the respective entrails package 7 has to be gripped by the gripping means 10. After the gripping means 10 and entrails package 7 have passed the adjacent straight section of the chain conveyor 8 the gripping means 10 may be opened and the entrails 7 may be supplied to a discharge chute 13 or alike. In the opened position the gripping means 10 next are returned to the processing apparatus 5.

Aside of the chain conveyor 8 at an inspection station 14 a veterinary inspector stands who checks whether the passing entrails 7 do not contain irregularities. Because the entrails, as seen from the position of the inspector, are at the frontal side of the chain conveyor 8 these are optimally visable. Further no discussion is possible about the question to which birds 3 the respective entrails packages 7 belong, for these entrails 7 and birds 3 are moved synchronously.

## Claims

1. Apparatus for processing poultry, comprising a suspension conveyor (1) for conveying the birds (3) with their legs (4) suspended therefrom, a processing station (5) disposed along a portion of the suspension conveyor (1) and having processing means (6) for removing the entrails (7) from the abdominal cavity as the birds are conveyed by the suspension conveyor (1), an inspection station (14) permitting a visual inspection of the entrails (7) and corresponding birds (3), and a further conveyor (8) synchronously driven with the suspension conveyor (1) and disposed substantially parallel to and at a predermined distance from a portion of the suspension conveyor (1), **characterized in that** the processing means (6) is adapted for entirely loosening the entrails (7) from the birds (3) and that the processing station is a rotating processing apparatus, whereby the further conveyor (8) is disposed after the processing apparatus (5) for receiving and conveying the separated entrails (7) along the inspection station (14) at the same time as the corresponding bird (3) carried by the suspension conveyor (1).

2. Apparatus according to claim 1, **characterized in that** the further conveyor (8) is an endless conveyor, such as a chain conveyor, carrying transportation means (10) for receiving the entrails packages.

3. Apparatus according to claim 1 or 2, **characterized in that** the transportation means comprise gripping means (10) movable between an opened and a closed position.

## Patentansprüche

1. Vorrichtung zur Verarbeitung von Geflügel, umfassend einen Hängeförderer (1) zum Transportieren der Vögel (3), die an ihren Beinen daran aufgehängt sind, zu einer Verarbeitungsstation (5), die entlang einem Abschnitt des Hängeförderers (1) angeordnet ist und über Verarbeitungsmittel (6) zur Entnahme der Eingeweide (7) aus der Bauchhöhle verfügt, während die Vögel von dem Hängeförderer (1) transportiert werden, eine Prüfstation (14), an der die Eingeweide (7) und die dazugehörigen Vögel (3) einer Sichtprüfung unterzogen werden können, und einen weiteren Förderer (8), der synchron mit dem Hängeförderer (1) angetrieben wird und im wesentlichen parallel und mit einem vorbestimmten Abstand zu einem Abschnitt des Hängeförderers (1) angeordnet ist, **dadurch gekennzeichnet, daß** das Verarbeitungsmittel (6) die Eingeweide (7) aus den Vögeln (3) vollständig lösen kann und daß die Verarbeitungsstation eine rotierende Verarbeitungsvorrichtung ist, wobei der weitere Förderer (8) hinter der Verarbeitungsvorrichtung (5) angeordnet ist, um die herausgetrennten Eingeweide (7) aufzunehmen und an der Prüfstation (14) gleichzeitig mit dem zugehörigen Vogel (3), der an dem Hängeförderer (1) hängt, vorbeizuführen.

2. Vorrichtung nach Anspruch 1, **dadurch gekennzeichnet, daß** der weitere Förderer (8) ein Endlosförderer, beispielweise ein Kettenförderer, ist, der Transportmittel (10) zur Aufnahme der Eingeweidebündel trägt.

3. Vorrichtung nach Anspruch 1 oder 2, **dadurch gekennzeichnet**, daβ das Transportmittel Greifmittel (10) umfaβt, die zwischen einer geöffneten und einer geschlossenen Position beweglich sind.

## Revendications

1. Appareil pour traiter des volailles, comportant un convoyeur de suspension (1) destiné à transporter les volatiles (3) ayant leurs pattes (4) suspendues à celui-ci, un poste de traitement (5) disposé le long d'une partie du convoyeur de suspension (1) et comportant des moyens de traitement (6) pour enlever les entrailles (7) à partir de la cavité abdominale lorsque les volatiles sont transportés par le convoyeur de suspension (1), un poste d'inspection (14) permettant l'inspection visuelle des entrailles (7) et des volatiles correspondants (3), et un autre convoyeur (8) entraîné de manière synchrone avec le convoyeur de suspension (1) et dispose pratiquement parallèle à une partie du convoyeur de suspension (1) et à une distance prédéterminée à partir de celle-ci, **caractérisé en ce que** les moyens de traitement (6) sont adaptés pour séparer entièrement les entrailles (7) des volatiles (3) et que la poste de traitement est un appareil de traitement rotatoire, dans lequel l'autre convoyeur (8) est disposé après l'appareil de traitement (5) pour recevoir et transporter les entrailles séparées (7) le long du poste d'inspection (14) en même temps que le volatile correspondant (3) transporté par le convoyeur de suspension (1).

2. Appareil selon la revendication 1, **caractérisé en ce que** l'autre convoyeur (8) est un convoyeur sans fin, tel qu'un convoyeur à chaîne, supportant des moyens de transport (10) destinés à recevoir les paquets d'entrailles.

3. Appareil selon la revendication 1 ou 2, **caractérisé en ce que** les moyens de transport comprennent de moyens de saisie (10) mobiles entre une position ouverte et une position fermée.
